# FASCICULE DE BREVET EUROPEEN

(11) **EP 1 035 997 B1**
(45) Date de publication et mention de la délivrance du brevet: **12.06.2002**
(21) Numéro de dépôt: 98958134.3
(22) Date de dépôt: 09.12.1998
(51) Int. Cl.: B62M 1/02

(54) **PEDALIER SANS POINT MORT, ET ENSEMBLE COMPRENANT UN TEL PEDALIER ET UN APPAREIL DE MESURE**
TRETLAGER OHNE TOTPUNKTE UND VORRICHTUNG MIT SOLCHEM TRETLAGER UND MESSVORRICHTUNG
CRANKSET WITHOUT DEAD CENTRE POINT, AND ASSEMBLY COMPRISING SUCH A CRANKSET AND A MEASURING APPLIANCE

(30) Priorité: 09.12.1997 EP 97121644
(43) Date de publication de la demande: 20.09.2000
(73) Titulaire: Bitz, Roland, 1958 St-Léonard (CH)
(72) Inventeur: NICULESCU, Florin, CH-2022 Bevaix (CH)
(74) Mandataire: Laurent, Jean
(86) Numéro de dépôt international: CH9800530
(87) Numéro de publication internationale: WO9929564

(56) Documents cités:
- WO-A-86/05459
- WO-A-97/20726
- FR-A- 2 520 692
- FR-A- 2 584 671
- US-A- 4 816 009
- US-A- 5 067 370

## Description

La présente invention concerne un pédalier sans point mort, notamment pour bicyclette, comportant
- un tube fixe de pédalier,
- un arbre monté à rotation autour d'un axe central à l'intérieur du tube de pédalier,
- une première manivelle fixée à une première extrémité de l'arbre,
- une seconde manivelle ayant une base montée à rotation par rapport à une seconde extrémité de l'arbre, ladite extrémité étant pourvue d'un moyeu de support sur lequel la base de la seconde manivelle est montée de manière rotative par au moins un palier,
- un excentrique disposé à proximité de la seconde extrémité de l'arbre et lié au tube par l'intermédiaire de moyens d'appui,
- un élément de sortie monté sur l'excentrique de manière rotative autour d'un axe excentrique qui est parallèle à l'axe central, mais décalé dans une direction d'excentricité, l'élément de sortie étant agencé pour entraîner une transmission mécanique, et
- une première et une seconde liaison articulée qui relient respectivement l'arbre et la seconde manivelle à l'élément de sortie pour entraîner celui-ci, le moyeu de support étant pourvu d'un levier qui fait partie de la première liaison articulée.

L'invention concerne en outre un ensemble comprenant un pédalier sans point mort et un appareil de mesure de l'énergie transmise par le pédalier.

L'invention s'applique en particulier à des pédaliers de cycles, mais aussi à tout autre cas d'utilisation d'un pédalier mû par la force musculaire, par exemple pour propulser un véhicule quelconque ou pour actionner une machine, un ventilateur, une génératrice électrique, etc. Habituellement, l'élément de sortie est muni d'un ou plusieurs plateaux dentés d'une transmission à chaîne.

Dans un pédalier classique, les deux positions verticales des manivelles dans un même plan radial constituent des points morts, parce que le poids du pédaleur ne peut pas produire un couple sur le pédalier dans ces positions. Pour supprimer cet inconvénient, il a été proposé depuis longtemps de créer un décalage angulaire cyclique entre les manivelles lorsqu'elles sont en haut et en bas, grâce à un décentrage du plateau denté vers l'avant. La demande internationale WO 97/20726 décrit un tel pédalier ayant deux arbres concentriques, tandis que les documents de brevets FR 763 303, FR 984 583 et US 5 067 370 décrivent de tels pédaliers n'ayant qu'un arbre, comme dans la présente invention. En dépit de leurs avantages cinématiques et dynamiques, ces pédaliers ne se sont pas imposés sur le marché.

Dans l'état de la technique, les pédaliers sans point mort à un seul arbre présentent deux problèmes principaux qui n'ont pas été résolus de manière satisfaisante jusqu'à présent : un montage rotatif suffisamment rigide et durable de la seconde manivelle, généralement située à droite, et un mode de support de l'excentrique permettant de lier celui-ci au tube d'une façon à la fois rigide et simple, en modifiant le moins possible la construction usuelle d'un cadre de bicyclette.

Par exemple, dans le pédalier décrit dans le brevet US 5 067 370 et correspondant au préambule de la revendication 1, l'excentrique est monté de manière pivotante, de sorte que la direction d'excentricité est réglable, sur une douille filetée extérieurement qui est vissée dans le tube de pédalier à la place de la douille usuelle et qui prolonge ainsi le tube. L'arbre s'étend en porte-à-faux à l'intérieur de cette douille et au-delà, pour supporter le levier de la première liaison articulée, et plus loin la seconde manivelle qui est pivotante sur un écrou vissé sur l'arbre. La construction proposée dans ce document manque manifestement de rigidité, notamment à cause du trop grand porte-à-faux de l'arbre. Une telle construction nécessite d'augmenter la longueur et le diamètre de l'arbre et ne peut donc pas employer des composants usuels. De plus, les opérations de montage et démontage du pédalier, qui sont requises par l'entretien courant ou le remplacement de certaines pièces, paraissent assez compliquées.

La présente invention a pour objet un pédalier susceptible d'éviter les inconvénients susmentionnés, en particulier de façon à offrir une bonne rigidité. On vise aussi à employer, dans des formes de réalisation particulières, certaines pièces standard des pédaliers classiques, notamment l'arbre et les éléments qui le supportent dans le tube de pédalier.

Un autre but particulier consiste à agencer le mécanisme du pédalier en un sous-ensemble amovible qui peut être monté aisément à la place du mécanisme correspondant d'un pédalier classique.

Un autre but particulier est de permettre un réglage facile de la direction d'excentricité du pédalier.

Encore un autre but particulier consiste à incorporer au pédalier un dispositif de mesure du couple moteur produit par la personne qui pédale.

Selon un premier aspect, l'invention concerne un pédalier du genre indiqué en préambule, caractérisé en ce que l'excentrique est monté de manière rotative par un palier respectif sur le moyeu de support.

Il en résulte que la seconde manivelle, l'élément de sortie et tout le mécanisme qui assure la suppression des points morts sont supportés par le moyeu et peuvent être montés d'avance sur celui-ci sous la forme d'un sous-ensemble. En outre, le moyeu peut être dimensionné de manière à présenter la rigidité voulue. Il peut être soit fait d'une seule pièce avec l'arbre, soit formé par une pièce distincte, par exemple agencée pour être emboîtée à la place d'une manivelle ordinaire sur l'extrémité d'un arbre de pédalier disponible dans le commerce.

Un avantage remarquable est que les paliers supportés par le moyeu, spécialement ceux de la seconde manivelle, peuvent avoir un diamètre intérieur nettement supérieur au diamètre extérieur de l'arbre, donc assurer une bonne rigidité, supporter des charges non radiales sans dommages et présenter une longue durée de service.

Dans une forme de réalisation particulièrement avantageuse d'un pédalier selon l'invention, le pédalier comporte un dispositif de mesure du couple de réaction exercé sur l'excentrique par les moyens d'appui. Ce dispositif peut comporter un seul capteur, sous forme d'un capteur de force incorporé aux moyens d'appui, c'est-à-dire les moyens empêchant la rotation de l'excentrique.

Selon un autre aspect de la présente invention, il est prévu un ensemble tel que défini dans la revendication 12 ou 14, comprenant un pédalier sans point mort et un appareil de mesure de l'énergie transmise par le pédalier, ledit appareil comprenant le dispositif de mesure du couple de réaction exercé sur l'excentrique par les moyens d'appui. Ce dispositif peut comporter un unique capteur, à savoir un capteur de force, incorporé aux moyens d'appui. Ce capteur a le grand avantage d'être stationnaire et peut donc transmettre aisément son signal de sortie à l'appareil de mesure monté par exemple sur le cadre ou le guidon de la bicyclette. L'appareil de mesure peut comporter des moyens pour calculer et afficher une puissance sur la base de l'énergie mesurée.

D'autres caractéristiques et avantages apparaîtront dans la description suivante divers modes de réalisation préférés d'un pédalier de bicyclette selon l'invention, présentés à titre d'exemples en référence aux dessins annexés, dans lesquels :
- la figure 1 est une vue en élévation latérale d'un premier mode de réalisation d'un pédalier sans point mort selon l'invention,
- la figure 2 est une vue analogue à la figure 1, montrant en outre des éléments cachés du pédalier,
- la figure 3 est une vue en coupe du pédalier de la figure 1 dans le plan de ses deux axes parallèles, ce plan étant par exemple horizontal,
- la figure 4 est une vue en coupe agrandie d'une partie de la figure 3,
- les figures 5 et 6 représentent une bague d'indexage, respectivement en élévation latérale et en coupe radiale,
- la figure 7 représente l'évolution du couple transmis aux plateaux dentés au cours d'un tour du pédalier sans point mort, lorsque le cycliste exerce uniquement une force verticale descendante sur les pédales,
- la figure 8 représente schématiquement les efforts s'exerçant sur l'excentrique,
- la figure 9 représente l'évolution du couple de réaction exercé sur l'excentrique au cours d'un tour du pédalier,
- les figures 10 à 12 représentent schématiquement différentes dispositions possibles d'un capteur de force associé à l'excentrique,
- les figures 13 à 17 sont des vues en coupe analogues à la figure 3, représentant chacune un autre mode de réalisation du pédalier,
- la figure 18 est une vue en coupe agrandie représentant un détail de la figure 17,
- la figure 19 est une vue en coupe agrandie représentant un capuchon de protection utilisable dans le pédalier de la figure 17,
- la figure 20 représente en perspective le capuchon de la figure 19, et
- la figure 21 est une vue en coupe simplifiée suivant la ligne XXI-XXI de la figure 19.

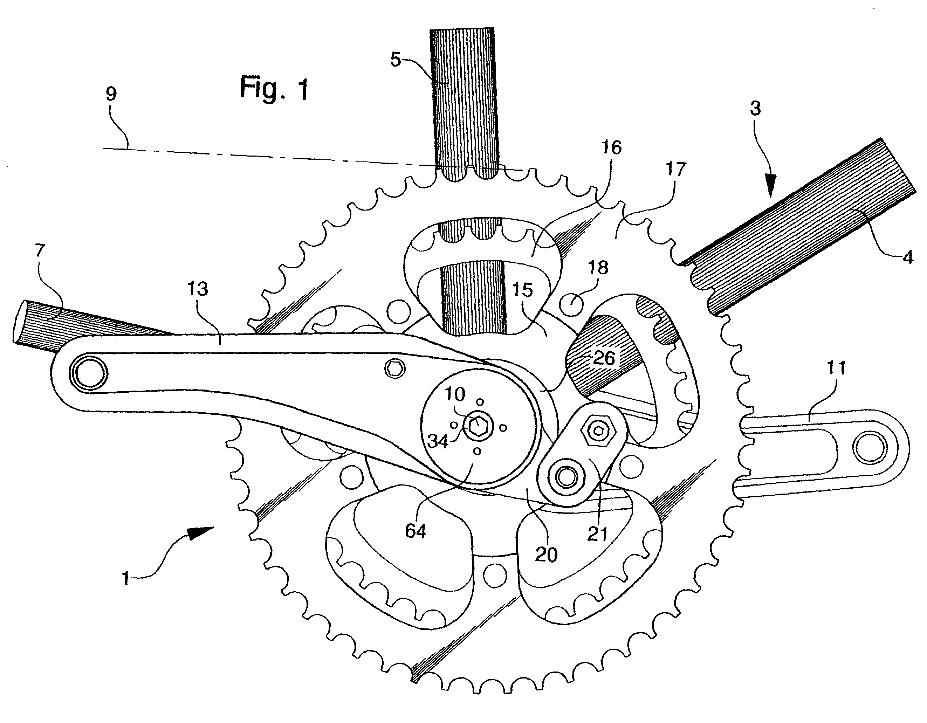

En référence aux figures 1 à 3, le pédalier 1 comporte un tube de pédalier 2 qui est incorporé à un cadre de bicyclette 3, ce cadre comprenant des tubes 4, 5, 6 et 7 dont une extrémité est soudée au tube 2. Un arbre creux 8 de pédalier classique est monté dans le tube 2 de manière rotative et coaxiale, pour tourner autour d'un axe central 10. Une manivelle gauche 11 pourvue d'une pédale non représentée est fixée de manière connue sur une première extrémité de l'arbre 8 au moyen d'un manchon 12 et d'un bouchon vissé dans l'arbre. Une manivelle droite 13 pourvue d'une pédale non représentée est montée de manière rotative par rapport à la seconde extrémité de l'arbre 8. Sur le côté droit de la bicyclette, le pédalier 1 comporte un porte-plateaux 15 sur lequel, de manière classique, sont montés par exemple deux plateaux dentés amovibles 16 et 17 destinés à entraîner la roue arrière de la bicyclette par une transmission à chaîne 9. Les plateaux sont fixés au moyen de vis 18.

Dans un plan radial situé entre le porte-plateaux 15 et la manivelle droite 13, un moyeu de support 19 fixé à l'arbre 8 présente un levier radial 20 dont l'extrémité libre est reliée au porte-plateaux par une biellette articulée 21. De même, la manivelle droite est reliée au porte-plateaux par une biellette articulée 23 identique à la biellette 21. Le levier 20 et la manivelle droite 13 s'étendent dans des directions respectives approximativement opposées, mais en oscillant angulairement l'un par rapport à l'autre au cours de la rotation du pédalier, de même que l'une des manivelles par rapport à l'autre.

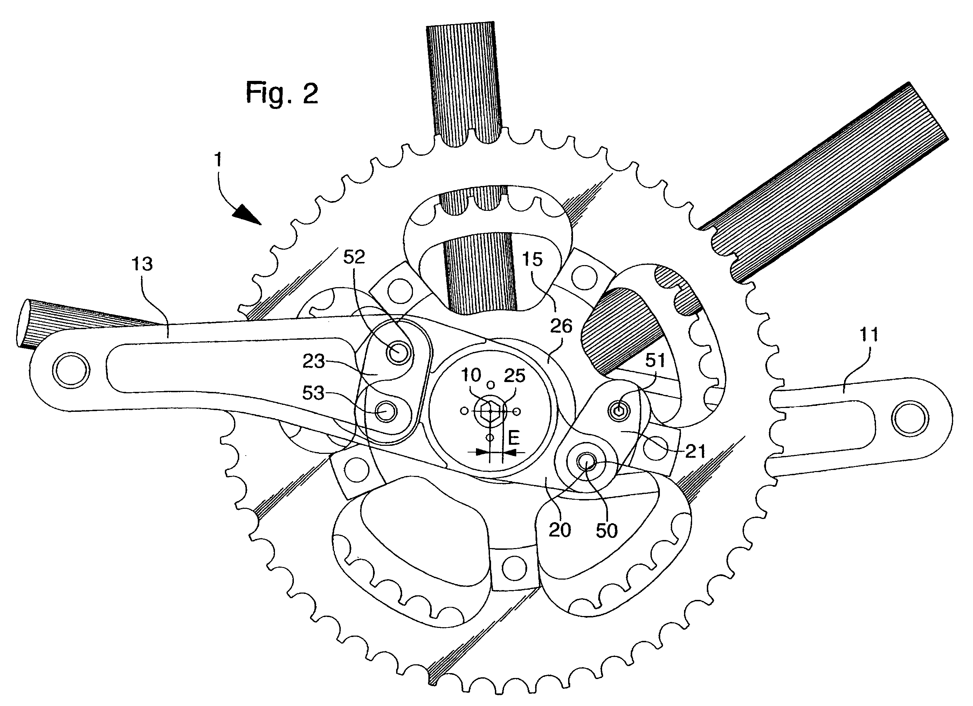

Dans les figures 2 à 4, on remarque que le porte-plateaux 15 est monté de manière excentrique par rapport à l'arbre 8, son centre de rotation se situant sur un axe excentrique 25 parallèle à l'axe central 10, mais décalé d'une excentricité E vers l'avant par rapport à celui-ci. Le porte-plateaux 15 est monté sur le pourtour d'un excentrique stationnaire 26 au moyen d'un roulement à billes 27. L'excentrique 26 est une pièce en forme générale de disque comportant un ouverture circulaire centrée sur l'axe 10, pour recevoir un roulement à billes 28 fixé à l'aide d'un circlip 29 sur le moyeu 19. L'excentrique est ainsi supporté et centré par le moyeu, donc aussi par l'arbre 8 portant ce dernier. Par ailleurs l'excentrique est lié au cadre 3 de la bicyclette, en particulier au tube de pédalier 2, par des moyens d'appui qui l'empêchent de tourner autour de l'axe 10. Dans le présent exemple, ces moyens comprennent une bague d'indexage 30 et un anneau compressible 31.

L'arbre de pédalier classique 8 utilisé dans cet exemple est commercialisé par Shimano sous la référence Dura-Ace BB-7700. Chacune de ses extrémités présente une partie légèrement conique 32, destinée à servir de siège à une manivelle ou au manchon 12, ainsi qu'au moyeu 19, et une tête à profil cannelé 33 destiné à bloquer toute rotation de cette manivelle sur l'arbre. Un bouchon fileté 34 destiné à fixer axialement la manivelle ou le manchon se visse dans l'extrémité de l'arbre 8. Cet arbre est monté dans le tube 2 de manière classique, au moyen de roulements non représentés et de deux douilles 35 et 36 pourvues d'organes d'étanchéité et d'une collerette extérieure 37 présentant sur son pourtour six crans régulièrement espacés pour l'engagement d'une clé de serrage. Chaque douille est vissée à l'intérieur du tube jusqu'à ce que sa collerette 37 se bloque contre l'extrémité du tube.

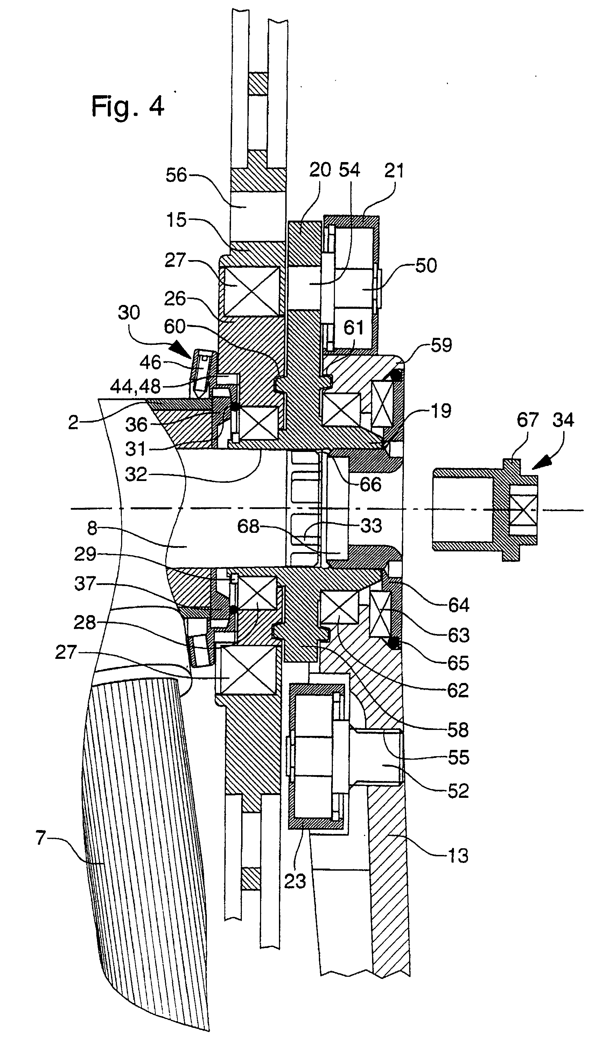

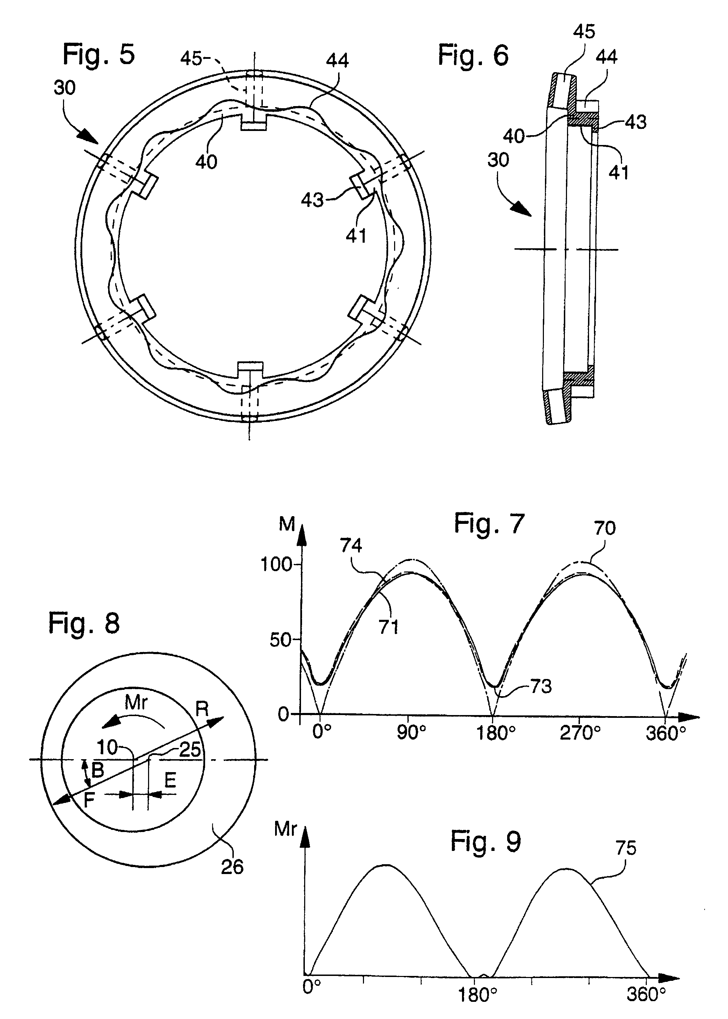

En se référant aux figures 5 et 6, on note que la bague d'indexage 30 comporte un corps annulaire 40 présentant six ergots intérieurs 41 agencés pour s'engager dans les crans de la douille 36 représentée à la figure 4. Chaque ergot 41 comporte aussi un rebord intérieur 43 destiné à buter contre cette douille. A l'extérieur, le corps 40 présente des cannelures 44 régulièrement espacées et en nombre premier, onze dans le cas présent, de sorte qu'elles présentent toutes un décalage angulaire différent par rapport à l'ergot 41 le plus proche. Six trous taraudés approximativement radiaux 45 sont ménagés dans le corps 40 pour des vis de blocage 46 (figure 4) servant à retenir axialement la bague 30 sur le tube 2.

En référence à la figure 4, on note que l'excentrique 26 comporte également onze cannelures ondulées 48 agencées pour s'engager sur les cannelures 44 de la bague d'indexage 30, afin d'empêcher toute rotation de l'excentrique par rapport à la bague. L'anneau 31, fait de préférence d'une matière compressible, est interposé entre l'excentrique 26 et la douille 36 le long des rebords 43 de la bague 30. Cet anneau remplit deux fonctions. D'une part il constitue un joint d'étanchéité entre les éléments 26 et 36. D'autre part il assure un appui axial élastique qui s'oppose à un mouvement d'inclinaison de l'excentrique et du porte-plateaux si l'arbre 8 tend à fléchir sous un grand effort. Cet appui soulage alors l'arbre et les paliers supportant celui-ci.

Lors du montage du pédalier, on peut placer la bague d'indexage 30 dans six positions différentes sur la douille 36, puis engager l'excentrique 26 sur cette bague dans onze positions différentes à choix. Ainsi, il est possible de monter l'excentrique 26 sur la bague d'indexage 30 de façon à orienter l'excentricité E pratiquement dans n'importe quelle direction voulue. Cette direction est horizontale vers l'avant dans l'exemple représenté. De manière connue, il en résulte que lorsque l'une des manivelles 11, 13 se trouve dans le plan vertical passant par l'axe 10, l'autre manivelle se trouve en avant de ce plan et produit un couple lorsque le pédaleur appuie verticalement sur elle, comme on l'expliquera en référence à la figure 7.

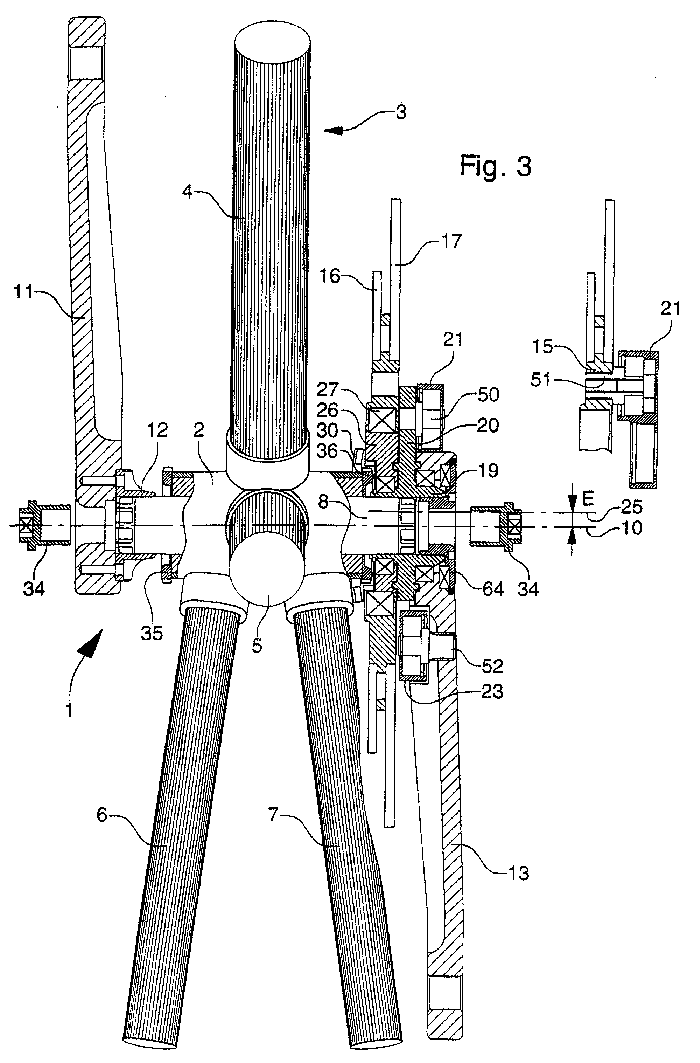

Dans la figure 3, les biellettes 21 et 23 sont représentées dans une position radiale fictive, afin de clarifier le dessin et laisser apparaître la construction de leurs articulations. C'est pourquoi on a représenté séparément, à droite dans cette figure, l'articulation de la biellette 21 sur le porte-plateaux 15. Une telle liaison articulée par biellettes est décrite en détails dans la demande internationale WO 97/20726 du présent inventeur, à laquelle le lecteur se référera au besoin. En référence aux figures 2 et 4, on notera simplement que les articulations des biellettes 21 et 23 sur la manivelle 13 sont réalisées par des roulements étanches montés sur des axes 50 à 53 qui sont fixés respectivement dans un orifice 54 du levier 20, un orifice 55 de la manivelle 13 et deux orifices 56 du porte-plateaux 15 qui sont diamétralement opposés par rapport à l'axe excentrique 25.

Le moyeu de support 19 comporte un flasque radial extérieur 58 situé entre l'excentrique 26 et la base 59 de la manivelle droite 13. Sur les deux faces du flasque 58 et sur les faces correspondantes de l'excentrique 26 et de la base 59 de la manivelle, des profils sinueux complémentaires sont ménagés pour former des joints d'étanchéité à labyrinthe 60 et 61 entre ces pièces, afin de protéger les paliers contre les jets d'eau et la saleté. De préférence, le moyeu 19, le flasque 58 et le levier 20 sont faits d'une seule pièce, mais une réalisation en plusieurs pièces est possible.

Un palier de roulement 62 est monté autour de la partie extérieure du moyeu 19 pour supporter la base 59 de la manivelle droite. Sa bague intérieure bute axialement contre le flasque 58. Le palier 62 est précontraint axialement au moyen d'un palier de butée axiale 63 disposé entre la base 59 et un couvercle annulaire 64 qui est vissé à l'intérieur du moyeu 19. Un joint d'étanchéité 65 placé entre le pourtour du couvercle 64 et la base 59 protège les paliers 62 et 63 vis-à-vis de l'extérieur.

Le montage de la manivelle 13 sur le moyeu 19 au moyen des paliers 62 et 63 relativement grands et précontraints permet de supporter de grands efforts sans jeu et garantit une longue durée de service. En outre, ce montage n'a pas besoin d'être démonté lorsqu'on veut ôter le pédalier de la bicyclette.

L'intérieur du moyeu 19 présente un profil cannelé saillant 66 qui s'engage axialement sur la tête cannelée 33 de l'arbre 8 et qui est poussé axialement par un collet extérieur 67 du bouchon fileté 34 lorsqu'on visse celui-ci dans l'arbre 8. Ainsi, le moyeu 19 emboîté sur l'extrémité de l'arbre est empêché de tourner sur celui-ci par les éléments cannelés 33 et 66. On remarque dans la figure 4 que le bouchon 34 est représenté à l'extérieur pour clarifier le dessin, mais en réalité son collet 67 est logé dans un évidement annulaire 68 du couvercle 64. Ainsi, lorsqu'on dévisse le bouchon 34, il repousse vers l'extérieur le couvercle 64 et arrache ainsi le moyeu 19 serré sur la partie conique 32 de l'arbre 8. Tous les éléments montés sur le moyeu 19 restent sur lui, l'excentrique 26 se dégageant des cannelures 44 de la bague d'indexage 30. On retire ainsi en un seul bloc toute la partie droite du pédalier, comprenant le moyeu de support, l'excentrique, les plateaux, la manivelle droite et tout le mécanisme de suppression des points morts.

En outre, la construction décrite ci-dessus permet d'assembler le pédalier à l'avance, hors du tube 2, puis de le monter en un bloc sur l'arbre 8, ou de le remplacer par une manivelle ordinaire équipée d'un porte-plateaux.

La figure 7 représente le couple de sortie M appliqué au porte-plateaux 15 en fonction de l'angle de rotation de celui-ci, en supposant que le cycliste exerce uniquement une force verticale descendante sur la manivelle descendante. La courbe 70 représente le couple dans un pédalier traditionnel, où les deux manivelles sont solidaires du porte-plateaux. La courbe 71 représente le couple dans le pédalier 1 selon l'invention, dans la disposition de la figure 2, c'est-à-dire avec l'excentricité E horizontale vers l'avant.

La courbe 71 est plus plate que la courbe 70, c'est-à-dire que le couple est plus uniforme sur un tour du pédalier. Le minimum de couple 73, dans la zone de point mort où le couple du pédalier traditionnel tombe à zéro, représente environ 20 % du couple maximal. En pratique, on sait que le couple minimal sera souvent un peu plus élevé, parce qu'un cycliste exercé applique tout de même certaines forces horizontales ou montantes aux pédales.

La courbe 74 représente le couple dans le pédalier 1 lorsque l'excentricité E est dirigée vers l'avant à 30° au-dessous de l'horizontale. On remarque qu'elle est très proche de la courbe 71 et présente les mêmes valeurs maximales et minimales, c'est-à-dire qu'un tel pivotement de l'excentrique 26 n'affecte pas les performances du pédalier lorsque les forces appliquées aux pédales sont verticales. Par contre, il permet d'adapter la cinématique du pédalier, en particulier la position de la zone où les manivelles sont décalées, à la morphologie du cycliste et à sa position sur la bicyclette.

La figure 8 représente schématiquement les efforts agissant sur l'excentrique 26 dans son propre plan, si l'on néglige les frottements. Sous l'effet de la tension de la chaîne et des efforts transmis par les biellettes, le porte-plateaux 15 exerce sur l'excentrique une force F passant par le centre du palier 27, représenté par l'axe 25. Cette force F est inclinée d'un angle B par rapport à la direction de l'excentricité E, supposée horizontale dans le cas présent. Comme l'excentrique 26 est monté d'une manière rotative par rapport à l'axe 10, la force F est équilibrée par une force de réaction R opposée à F, mais passant par l'axe 10, et par un couple de réaction Mr produit par les moyens d'appui, à savoir les cannelures 44 de la bague d'indexage dans l'exemple décrit ci-dessus. Comme Mr = - F · E sin B et que la valeur de E est toujours relativement faible, typiquement environ 5 à 10 mm, la valeur du couple Mr reste toujours assez faible.

La figure 9 montre schématiquement l'évolution du couple de réaction Mr en fonction de l'angle de rotation du porte-plateaux. On remarque que le couple Mr est toujours de même signe et que sa courbe 75 présente à chaque tour deux maximums et deux minimums proches de zéro.

Ces constatations ont conduit à l'idée inventive consistant à mesurer le couple de réaction Mr en continu et à l'intégrer en fonction de l'angle de rotation du porte-plateaux pour obtenir une valeur représentative de l'énergie transmise par l'utilisateur à travers le pédalier. En divisant cette énergie par la durée considérée, on peut calculer la puissance moyenne fournie par l'utilisateur pendant cette durée.

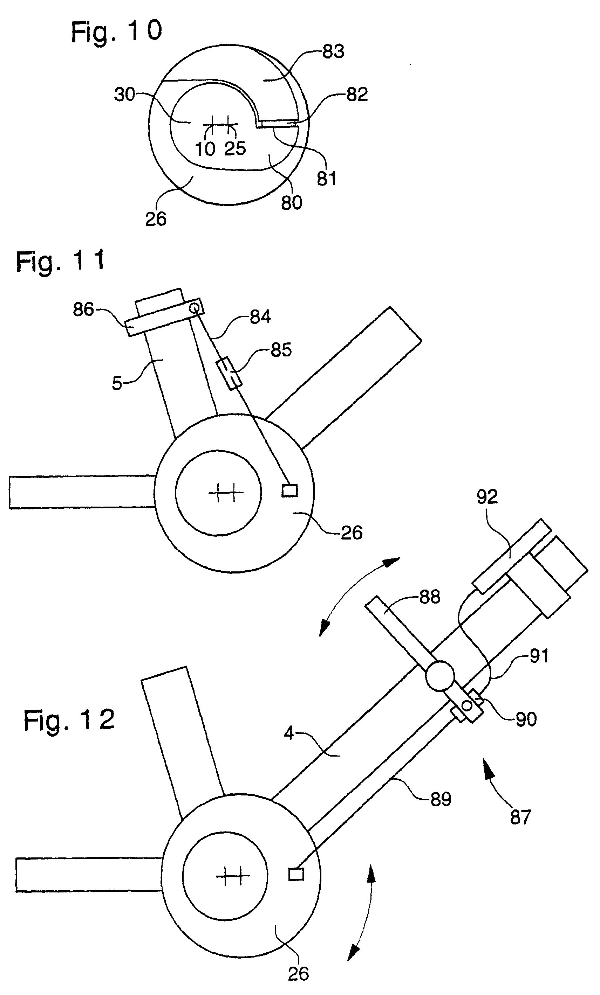

Le grand avantage pratique de cette méthode est que le couple de réaction Mr peut être mesuré au moyen d'un capteur unique et stationnaire, ce qui n'est pas réalisable en pratique dans un pédalier classique. Le capteur est de préférence un capteur de force monté sur le cadre de la bicyclette et associé aux moyens d'appui qui empêchent une rotation de l'excentrique. Les figures 10 à 12 donnent quelques exemples de disposition d'un tel capteur de force.

Selon la figure 10, la bague d'indexage 30 comporte, au lieu des cannelures 48 décrites plus haut, une saillie latérale 80 ayant une surface radiale 81 qui porte un capteur de force 82. L'excentrique 26 s'appuie sur ce capteur par l'intermédiaire d'une saillie latérale correspondante 83.

Dans la variante de la figure 11, l'excentrique 26 prend appui sur le tube 5 du cadre de la bicyclette au moyen d'un câble 84 associé à un capteur 85 qui mesure la tension du câble. Le câble est fixé au tube 5 au moyen d'un collier 86 qu'on peut déplacer pour régler la direction d'excentricité.

Dans la variante de la figure 12, l'utilisateur peut régler en marche la direction d'excentricité de l'excentrique 26 au moyen d'un mécanisme de commande 87 comportant une manette 88 montée sur le tube 3 du cadre et reliée à l'excentrique par un câble 89 ou une tringle. Le capteur 90 mesurant la tension de ce câble ou de cette tringle peut être placé à n'importe quel endroit convenable du mécanisme de commande. Son signal de sortie est transmis par une connexion souple 91 à un appareil électronique de mesure 92 placé à n'importe quel endroit convenable sur la bicyclette. Le cas échéant, cet appareil peut aussi recevoir le signal de sortie d'un autre capteur indiquant la direction d'excentricité.

Un aspect avantageux d'un tel dispositif de mesure est que le signal de sortie du capteur de force, représentant l'évolution du couple Mr illustrée par la figure 9, indique aussi le nombre de demi-tours du porte-plateaux, qui est égal au nombre de maximums de la courbe 75. Il en résulte que l'appareil de mesure 92 peut calculer l'énergie à partir de ce seul signal. A l'aide d'un signal d'horloge, il peut aussi calculer la puissance moyenne sur une période prédéterminée et afficher cette puissance et/ou l'énergie sous les yeux de l'utilisateur.

Il faut remarquer qu'un dispositif de mesure de couple tel que décrit ci-dessus est applicable non seulement à un pédalier à un seul arbre, donc du genre décrit dans la présente demande, mais aussi à un pédalier à deux arbres, par exemple du genre décrit dans les demandes de brevet WO 86/05459 et WO 97/20726. Il suffit que le pédalier comporte un excentrique supportant l'élément de sortie constitué par le porte-plateaux qui reçoit des forces d'entraînement des manivelles via des liaisons articulées.

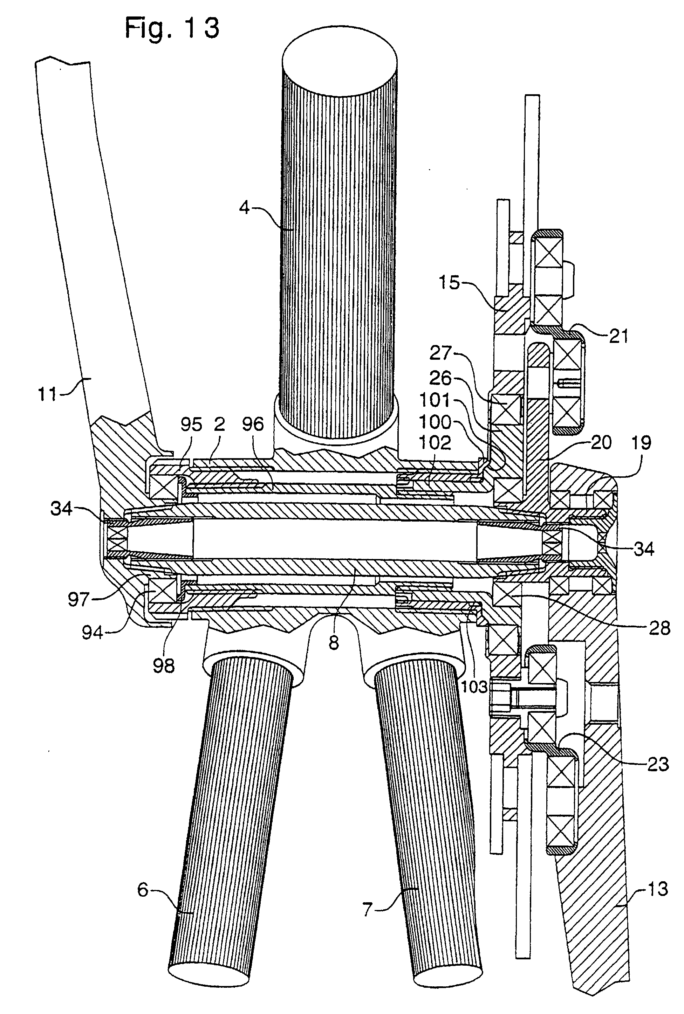

Cinq autres modes de réalisation d'un pédalier sans point mort selon l'invention sont illustrés par les figures 13 à 17, qui sont des vues en coupe analogues à celle de la figure 3, mais légèrement agrandies. On décrira essentiellement les différences par rapport au premier mode de réalisation décrit plus haut, dont les numéros de référence sont repris dans les figures qui suivent lorsqu'ils se rapportent aux mêmes éléments, même si ceux-ci ont une conformation un peu différente.

Dans la version de la figure 13, l'arbre 8 portant le moyeu de support 19 est monté dans le tube de pédalier 2 de manière indirecte, grâce à deux paliers de roulement 94 et 28 qui ne touchent ni l'arbre, ni le tube. Du côté gauche, une douille 95 filetée extérieurement est vissée dans l'extrémité du tube 2 et présente un filetage intérieur dans lequel est vissée une entretoise tubulaire 96. La base de la manivelle gauche 11 présente un rebord intérieur annulaire 97 qui est emboîté sur l'extrémité conique de l'arbre 8 et porte la bague intérieure du roulement 94. La bague extérieure de ce roulement est appuyée par une rondelle élastique 98 qui s'appuie contre l'entretoise 96 et met en précontrainte le roulement lorsqu'on visse dans l'arbre le bouchon fileté 34 qui maintient la manivelle 11. Les deux filetages de ce bouchon s'engageant respectivement dans l'arbre 8 et dans la manivelle 11 sont de sens opposés, si bien que lorsque l'on visse le bouchon, il s'enfonce dans l'arbre et simultanément la manivelle se rapproche de l'arbre, s'engage sur les cannelures de l'arbre et va s'appuyer contre le roulement 94. Il en va de manière analogue dans les versions des figures suivantes 14 à 17.

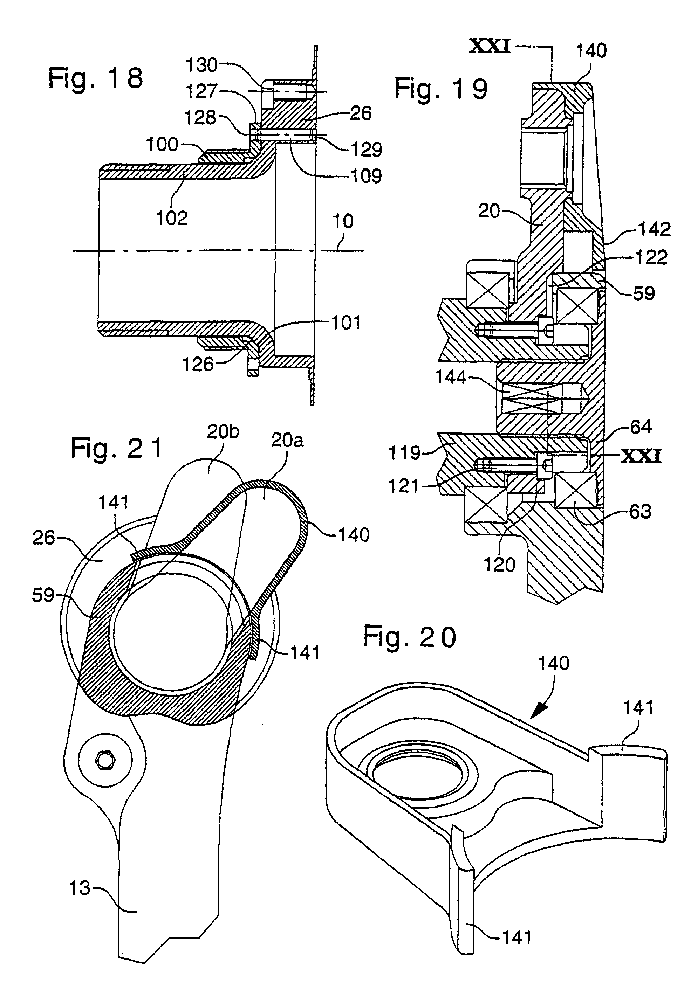

Du côté droit, le tube 3 supporte l'arbre 8 par l'intermédiaire de l'excentrique 26 et du palier de roulement 28, placé entre l'excentrique et le moyeu 19 comme dans le premier mode de réalisation. Une douille 100 filetée extérieurement est vissée dans l'extrémité droite du tube 2 et présente une surface conique intérieure 101 qui sert de surface de centrage pour l'excentrique 26, ce dernier ayant une surface de centrage correspondante comme on le décrira plus loin en référence à la figure 18. L'excentrique 26 comporte un embout cylindrique 102 qui s'emboîte avec un léger jeu radial à l'intérieur de la douille 100 et qui présente un filetage intérieur pour se visser sur l'extrémité droite de l'entretoise 96. En vissant la douille 95 sur l'entretoise 96, l'excentrique 26 est appliqué fortement contre la douille 100. Le blocage de rotation de l'excentrique est assuré par des cannelures 103 sur la douille 100.

La fixation du moyeu 19 à l'arbre 8 au moyen du bouchon fileté 34, ainsi que le montage de la manivelle droite 13 sur le moyeu 19, sont analogues à ce qui a été décrit plus haut.

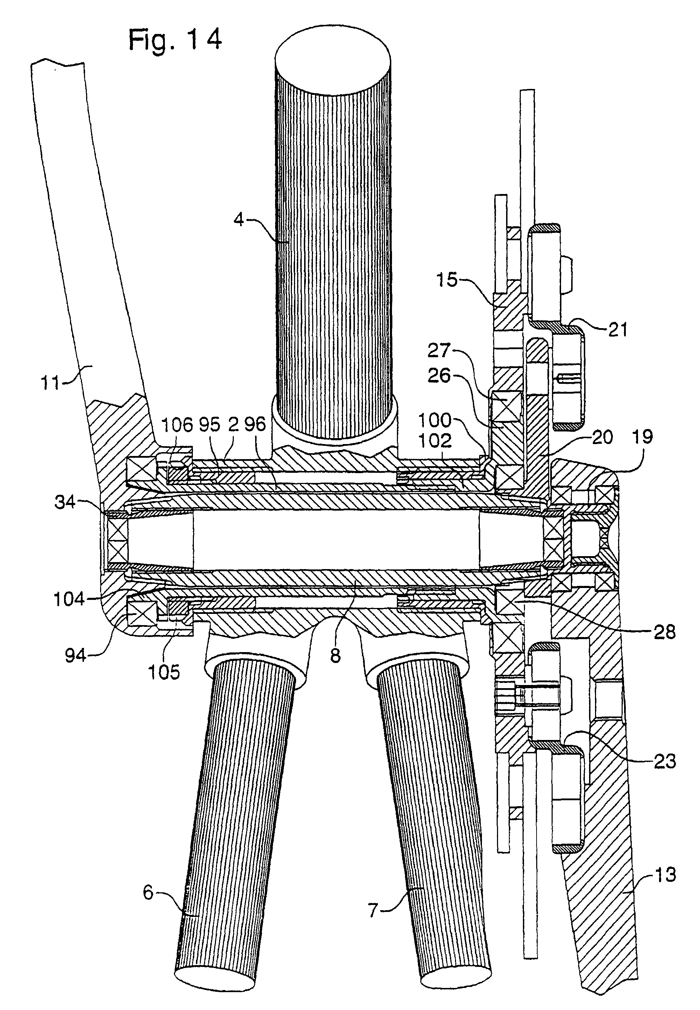

La version de la figure 14 diffère de celle de la figure 13 essentiellement par la disposition du palier du roulement gauche 94, dont la bague extérieure porte la manivelle gauche 11. La bague intérieure de ce roulement est montée sur un épaulement de l'extrémité gauche 104 de l'entretoise 96. Sur cette entretoise est vissé un écrou 105 qui, lorsqu'on le serre, s'appuie contre une surface de centrage conique 106 de la douille filetée 95 vissée dans le tube 2. Le serrage de l'écrou 105 assure en même temps l'appui de l'excentrique 26 contre la douille 100, comme dans l'exemple précédent.

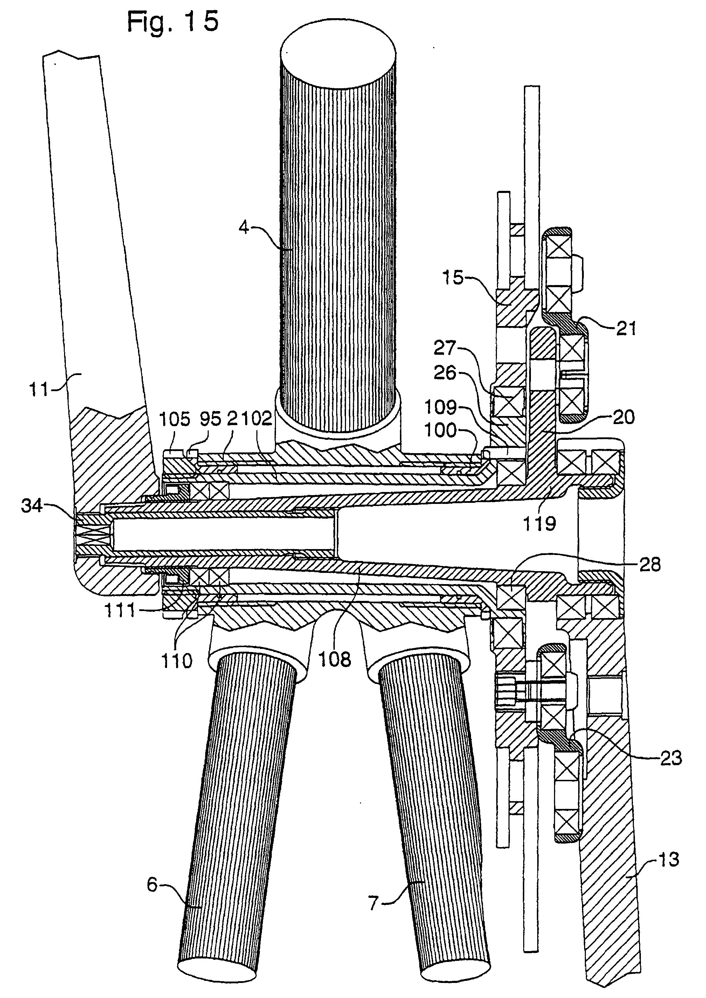

Dans la version de la figure 15, on a remplacé l'arbre 8 et le moyeu 19 décrits plus haut par une seule pièce comprenant l'arbre creux 108, le moyeu de support 119 constitué par l'extrémité droite de l'arbre 108, et le levier 20 articulé à la biellette 21. L'embout tubulaire 102 de l'excentrique 26 est assez long pour traverser tout le tube de pédalier 2, à la place de l'entretoise 96 décrite plus haut. Comme cette dernière, il porte un écrou 105 s'appliquant contre une surface de centrage intérieure conique de la douille filetée 95 vissée dans l'extrémité gauche du tube 2. L'excentrique 26 est bloqué en rotation sur la douille filetée 100 au moyen d'une goupille cylindrique 109 permettant d'orienter l'excentrique dans différentes directions, comme on le décrira plus loin en référence à la figure 18.

L'arbre 108 est supporté entièrement par l'excentrique 26 et son embout 102, grâce au palier de roulement 28 à droite et à un palier gauche constitué de deux roulements 110 qui sont précontraints entre un épaulement intérieur de l'embout 102 et un écrou 111 vissé sur l'arbre 108, ce qui met aussi en précontrainte le palier 28. La manivelle gauche 11 est fixée sur l'extrémité de l'arbre 108 à l'aide du bouchon fileté 34 vissé dans l'arbre.

On remarque que cette construction permet, en déposant simplement la manivelle gauche et l'écrou 105, d'extraire du tube 2 tout le mécanisme du pédalier sans point mort en faisant simplement coulisser l'embout 102 dans les douilles 95 et 100. Ce coulissement est facilité par le petit jeu radial existant entre l'embout 102 et les deux douilles, ce jeu étant permis par l'emploi des surfaces de centrage coniques.

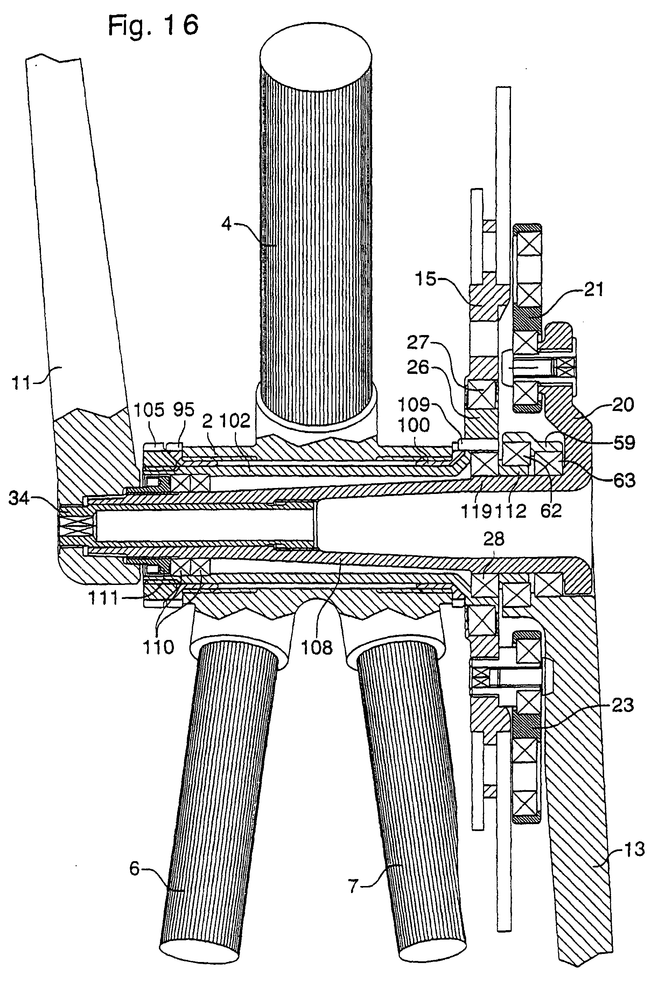

La version de la figure 16 diffère de celle de la figure 15 par le fait que le levier 20 est disposé à l'extérieur par rapport à la base 59 de la manivelle droite 13, donc aussi aux roulements 62 et 63 portant cette manivelle sur le moyeu de support 119 solidaire de l'arbre 108. Le serrage de l'écrou 111 met en précontrainte non seulement les paliers de roulement 110 et 28 de l'arbre 108, mais aussi les roulements 62 et 63 qui sont comprimés axialement entre l'extrémité évasée du moyeu 119 et une bague intermédiaire 112 s'appuyant contre la bague intérieure du roulement 28. Pour le reste l'arbre 108 est supporté comme dans l'exemple précédent, ce qui offre les mêmes avantages.

Un avantage de la disposition extérieure du levier 20 est que les biellettes 21 et 23 peuvent être rectilignes et que leurs roulements sont tous sensiblement dans un même plan, ce qui réduit les efforts non radiaux sur ces roulements. Néanmoins, le levier 20 n'est pas encombrant puisqu'il ne dépasse pas latéralement (vers la droite dans le dessin) l'encombrement de la manivelle 13.

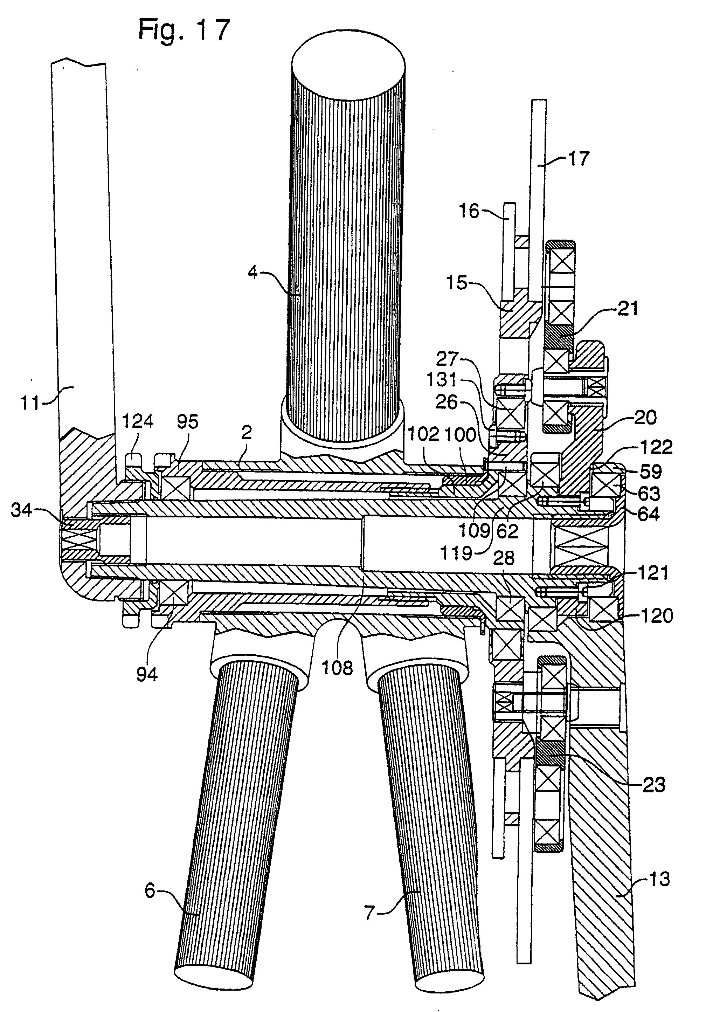

Dans la version de la figure 17, le levier 20 est disposé entre les deux roulements 62 et 63 supportant la base 59 de la manivelle 13. C'est pourquoi il est constitué par une pièce séparée, ayant une base annulaire 120 qui est emboîtée sur le moyeu 119, auquel elle est fixée par des vis 121. Le levier 20 s'étend à travers une fente 122 de la base 59 de la manivelle, où il effectue une oscillation angulaire identique à celle de la manivelle gauche 11 par rapport à la manivelle droite 13. Cette fente peut être obturée d'une façon qui sera décrite plus loin. Le maintien axial de la manivelle 13 et la précontrainte de ses roulements 62 et 63 sont assurés par un couvercle fileté 64 comme on l'a décrit en référence aux figures 3 et 4.

L'excentrique 26 et son embout tubulaire 102 sont supportés dans le tube 2 à l'aide de la douille filetée 100, comme dans les versions des figures 15 et 16, et ils supportent le moyeu 119 de l'arbre 108 par le palier de roulement 28. Le palier de roulement 94 supportant l'extrémité gauche de l'arbre 108 est monté directement dans la douille filetée 95 vissée dans le tube 2, tandis que l'extrémité droite de cette douille est vissée sur l'embout 102 pour assurer le serrage et le centrage de l'excentrique 26. La base de la manivelle gauche 11, fixée à l'arbre 108 par le bouchon fileté 34, porte un écrou extérieur 124 qui s'applique contre la bague intérieure du palier 94 pour le mettre en précontrainte, ainsi que le palier 28.

On remarque que la disposition particulière du levier 20 selon la figure 17 permet une configuration rectiligne des biellettes 21 et 23 comme dans l'exemple précédent. Elle a en outre l'avantage d'espacer axialement les deux roulements 62 et 63 sur le moyeu 119, ce qui assure un montage très rigide de la manivelle et une réduction des efforts sur les roulements.

La figure 18 montre plus en détail comment l'excentrique 26 et son embout 102 sont positionnés de manière centrée dans la douille filetée 100 lorsqu'ils sont tirés vers la gauche par la douille filetée 95 représentée à la figure 13, ou par l'écrou 105 représenté aux figures 14 à 16, ou encore par l'écrou 124 représenté à la figure 17. La douille 100 fixée au tube de pédalier présente la surface conique intérieure 101 (figure 13) contre laquelle va s'appuyer une surface conique extérieure 126 de l'embout 102, ces deux surfaces constituant ainsi des surfaces de centrage, puisqu'il existe un jeu radial entre les éléments 100 et 102.

Pour assurer le positionnement angulaire de l'excentrique 26 autour de l'axe central 10, un collet radial 127 de la douille 100 comporte au moins un trou axial 128 destiné à recevoir la goupille cylindrique 109. A la même distance de l'axe 10, l'excentrique 26 comporte une rangée circulaire de trous 129 dont chacun peut être mis en face du trou 128 et recevoir la cheville 109. On peut toujours accéder à cette cheville en faisant tourner les manivelles jusqu'à une position où la cheville n'est pas recouverte par la manivelle 13 ou le levier 20, si bien que l'utilisateur peut modifier à volonté la direction de l'excentricité en faisant pivoter l'excentrique 26 après avoir desserré l'écrou mentionné plus haut et en plaçant la cheville dans un autre des trous 129.

On voit en outre dans la figure 18 un alésage fileté 130 pour des vis 131 (figure 17) permettant la fixation axiale du roulement 27 sur l'excentrique.

Les figures 19 à 21 montrent comment, dans la construction illustrée par la figure 17, il est possible d'obturer la fente 122 de la base 59 de la manivelle droite 13, à travers laquelle le levier 20 oscille, afin d'empêcher que de la saleté entre dans cette fente. Il est prévu à cet effet un capuchon 140, réalisé de préférence en matière plastique et emboîté sur le levier 20, sur lequel il peut être maintenu par clipsage ou par tout autre moyen approprié. En avant et en arrière du levier, le capuchon 140 présente une jupe 141 qui s'applique en glissant contre la base 59 de la manivelle. Dans la figure 21, on a représenté les deux positions extrêmes 20a et 20b que le levier atteint par son oscillation dans la fente 122. On voit que chaque jupe 141 est assez longue pour obturer cette fente dans n'importe quelle position du levier. D'autre part, la figure 19 montre que la face extérieure 142 du capuchon 140 peut avantageusement se trouver à fleur de la surface extérieure du couvercle 64 recouvrant le roulement 63 de la manivelle, de sorte que le pédalier ne présente pas de saillie gênante dans cette zone. La figure 19 montre aussi une exécution particulière du couvercle 64, offrant une surface extérieure lisse du fait que son alésage à six pans 144 se trouve du côté intérieur, pour être accessible à partir de l'autre extrémité de l'arbre creux du pédalier.

Dans une variante non représentée, le capuchon 140 pourrait être remplacé par un capuchon fixé sur la face extérieure du couvercle 64, qui effectue le même mouvement d'oscillation que le levier 20. Ce capuchon pourrait recouvrir la fente 122 sans nécessairement recouvrir le levier 20. Dans une autre variante, il est possible de combiner le capuchon 140 et le couvercle 64 en une seule pièce, qui peut être fixée par une vis centrale à l'intérieur du moyeu 119.

Les divers modes de réalisation décrits en référence aux figures 13 à 21 peuvent évidemment être combinés entre eux sous certains aspects. Par exemple, la disposition du levier 20 à l'intérieur, au milieu ou à l'extérieur des deux roulements 62 et 63, peut être combinée avec n'importe lequel des modes de montage de l'arbre 8 ou 108 dans le tube de pédalier 2. Il en va de même pour la réalisation de l'arbre et du moyeu de support en deux pièces 8 et 19 ou en une seule pièce 108, 119.

En outre, il est aussi possible de combiner les modes de réalisation illustrés par les figures 13 à 21 avec un dispositif de mesure du couple de réaction exercé sur l'excentrique, selon les principes exposés en référence aux figures 7 à 12. Cependant, comme l'excentrique est bloqué en rotation par la goupille 109, la mesure des efforts qu'il subit, en particulier à cause du décalage latéral des biellettes 21 et 23 par rapport au plan médian du porte-plateaux 15 et de l'excentrique 26, pourra s'effectuer à l'aide de jauges de contrainte placées sur l'excentrique.

## Revendications

1. Pédalier sans point mort, notamment pour bicyclette, comportant
- un tube fixe (2) de pédalier,
- un arbre (8, 108) monté à rotation autour d'un axe central (10) à l'intérieur du tube de pédalier,
- une première manivelle (11) fixée à une première extrémité de l'arbre,
- une seconde manivelle (13) ayant une base montée à rotation par rapport à une seconde extrémité de l'arbre, ladite extrémité étant pourvue d'un moyeu de support (19, 119) sur lequel la base de la seconde manivelle est montée de manière rotative par au moins un palier (62, 63),
- un excentrique (26) disposé à proximité de la seconde extrémité de l'arbre et lié au tube par l'intermédiaire de moyens d'appui,
- un élément de sortie (15) monté sur l'excentrique de manière rotative autour d'un axe excentrique (25) qui est parallèle à l'axe central, mais décalé dans une direction d'excentricité, l'élément de sortie étant agencé pour entraîner une transmission mécanique, et
- une première et une seconde liaison articulée (20, 21, 23) qui relient respectivement l'arbre (8, 108) et la seconde manivelle (13) à l'élément de sortie (15) pour entraîner celui-ci, le moyeu de support étant pourvu d'un levier (20) qui fait partie de la première liaison articulée,
**caractérisé en ce que** l'excentrique (26) est monté de manière rotative par un palier respectif (28) sur le moyeu de support (19, 119).

2. Pédalier selon la revendication 1, **caractérisé en ce que** les moyens d'appui sont agencés pour définir différentes directions de l'excentricité.

3. Pédalier selon la revendication 1 ou 2, **caractérisé en ce qu'**il comporte un dispositif (81-90) de mesure du couple de réaction exercé sur l'excentrique par les moyens d'appui.

4. Pédalier selon la revendication 3, **caractérisé en ce que** les moyens d'appui sont agencés pour exercer sur l'excentrique une force orthogonale par rapport à l'axe central (10) et **en ce que** le dispositif de mesure de couple comporte un capteur de force (81, 85, 90) incorporé aux moyens d'appui pour mesurer ladite force.

5. Pédalier selon les revendications 2 et 4, **caractérisé en ce que** les moyens d'appui comportent un mécanisme de commande (87), agencé pour modifier la direction d'excentricité, et **en ce que** le capteur de force (90) est incorporé à ce mécanisme de commande.

6. Pédalier selon la revendication 2, **caractérisé en ce qu'**il comporte, en regard de l'excentrique, une douille (36) vissée dans le tube (2) et pourvue de crans répartis sur son pourtour à l'extérieur du tube, et **en ce que** les moyens d'appui comportent une bague d'indexage (30) agencée pour s'engager dans lesdits crans et pourvue de cannelures extérieures (44) sur lesquelles l'excentrique peut être engagé dans différentes positions angulaires.

7. Pédalier selon la revendication 1, **caractérisé en ce que** le moyeu de support (19) est formé par une pièce distincte de l'arbre (8) et est emboîté de manière amovible sur la seconde extrémité de l'arbre.

8. Pédalier selon la revendication 1, **caractérisé en ce que** le moyeu de support (119) est fait d'une seule pièce avec l'arbre (108).

9. Pédalier selon la revendication 7 ou 8, **caractérisé en ce que** le moyeu de support (19, 119) et le levier (20) sont réalisés en une seule pièce.

10. Pédalier selon l'une des revendications précédentes, **caractérisé en ce que** la base (59) de la seconde manivelle est pressée en direction de l'arbre au moyen d'un palier de butée (63) disposé entre elle et un couvercle (64) fixé au moyeu par vissage.

11. Pédalier selon la revendication 1, **caractérisé en ce que** l'excentrique (26) comporte un embout tubulaire (102) s'appuyant sur la première extrémité du tube (2) grâce à des surfaces de centrage (101, 126), l'arbre (8, 108) étant supporté par ladite extrémité du tube par l'intermédiaire de l'excentrique.

12. Ensemble comprenant un pédalier selon l'une des revendications 3 à 5 et un appareil (92) de mesure de l'énergie fournie au pédalier par un utilisateur, ledit appareil comprenant le dispositif (81-90) de mesure du couple de réaction exercé sur l'excentrique par les moyens d'appui.

13. Ensemble selon la revendication 12, **caractérisé en ce que** l'appareil de mesure (92) comporte des moyens pour calculer et afficher une puissance sur la base de l'énergie mesurée.

14. Ensemble comprenant un pédalier sans point mort (1) et un appareil (92) de mesure de l'énergie fournie au pédalier par un utilisateur, le pédalier (1) comportant:
- un tube fixe (2) de pédalier,
- au moins un arbre (8) monté à rotation autour d'un axe central (10) à l'intérieur du tube de pédalier,
- une première manivelle (11) fixée à une première extrémité de l'arbre,
- une seconde manivelle (13) ayant une base disposée à proximité d'une seconde extrémité de l'arbre et montée à rotation par rapport audit arbre,
- un excentrique (26) disposé à proximité de la seconde extrémité de l'arbre et lié au tube par l'intermédiaire de moyens d'appui,
- un élément de sortie (15) monté sur l'excentrique de manière rotative autour d'un axe excentrique (25) qui est parallèle à l'axe central, mais décalé dans une direction d'excentricité, l'élément de sortie étant agencé pour entraîner une transmission mécanique, et
- une première et une seconde liaison articulée (20, 21, 23) qui relient respectivement l'arbre (8) et la seconde manivelle (13) à l'élément de sortie (15) pour entraîner celui-ci,
ledit appareil comprenant un dispositif (81-90) de mesure de forces exercées sur l'excentrique (26) et des moyens pour calculer, à partir desdites forces, un couple de réaction exercé sur l'excentrique par les moyens d'appui et calculer ladite énergie par intégration dudit couple par rapport à la rotation de l'élément de sortie (15).

15. Ensemble selon la revendication 14, **caractérisé en ce que** l'appareil de mesure (92) comporte des moyens pour calculer et afficher une puissance sur la base de l'énergie mesurée.

## Patentansprüche

1. Tretkurbel ohne Totpunkt, insbesondere für Fahrrad, die umfaßt:
- ein festes Tretkurbelrohr (2),
- eine Welle (8, 108), die drehbar um eine Mittelachse (10) innerhalb des Tretkurbelrohrs angebracht ist,
- eine erste Kurbel (11), die an einem ersten Ende der Welle befestigt ist,
- eine zweite Kurbel (13), die eine Basis besitzt, die drehbar in bezug auf ein zweites Ende der Welle angebracht ist, wobei dieses Ende mit einer Trägernabe (19, 119) versehen ist, an der die Basis der zweiten Kurbel in der Weise angebracht ist, daß sie über wenigstens ein Lager (62, 63) drehbar ist,
- eine Exzenterscheibe (26), die in der Nähe des zweiten Endes der Welle angeordnet und mit dem Rohr über Abstützmittel verbunden ist,
- ein Abtriebselement (15), das an der Exzenterscheibe drehbar um eine exzentrische Achse (25), die zur Mittelachse parallel, jedoch in einer Exzentritätsrichtung versetzt ist, angebracht ist, wobei das Abtriebselement so beschaffen ist, daß es eine mechanische Kraftübertragung antreibt, und
- eine erste und eine zweite Gelenkverbindung (20, 21, 23), die die Welle (8, 108), bzw. die zweite Kurbel (13) mit dem Abtriebselement (15) verbinden, um dieses anzutreiben, wobei die Trägernabe mit einem Hebel (20) versehen ist, der einen Teil der ersten Gelenkverbindung bildet,
**dadurch gekennzeichnet, daß** die Exzenterscheibe (26) über ein entsprechendes Lager (28) drehbar an der Trägernabe (19, 119) angebracht ist.

2. Tretkurbel nach Anspruch 1, **dadurch gekennzeichnet, daß** die Abstützmittel so beschaffen sind, daß sie verschiedene Exzentritätsrichtungen definieren.

3. Tretkurbel nach Anspruch 1 oder 2, **dadurch gekennzeichnet, daß** sie eine Vorrichtung (81-90) zum Messen des von den Abstützmitteln auf die Exzenterscheibe ausgeübten Gegendrehmoments enthält.

4. Tretkurbel nach Anspruch 3, **dadurch gekennzeichnet, daß** die Abstützmittel so beschaffen sind, daß sie auf die Exzenterscheibe eine zur Mittelachse (10) senkrechte Kraft ausüben, und daß die Vorrichtung zum Messen des Drehmoments einen Kraftsensor (81, 85, 90) umfaßt, der in die Abstützmittel eingebaut ist, um die Kraft zu messen.

5. Tretkurbel nach den Ansprüche 2 und 4, **dadurch gekennzeichnet, daß** die Abstützmittel einen Steuermechanismus (87) umfassen, der so beschaffen ist, daß er die Exzentritätsrichtung verändert, und daß der Kraftsensor (90) in diesen Steuermechanismus eingebaut ist.

6. Tretkurbel nach Anspruch 2, **dadurch gekennzeichnet, daß** sie gegenüber der Exzenterscheibe eine Hülse (36) aufweist, die in das Rohr (2) geschraubt ist und mit Rasten, die auf ihrem Umfang außerhalb des Rohrs verteilt sind, versehen ist, und daß die Abstützmittel einen Indexierungsring (30) aufweisen, der so beschaffen ist, daß er in die Rasten eingreift und mit äußeren Rillen (44) versehen ist, in denen die Exzenterscheibe in unterschiedlichen Winkelstellungen in Eingriff gelangen kann.

7. Tretkurbel nach Anspruch 1, **dadurch gekennzeichnet, daß** die Trägernabe (19) aus einem von der Welle (8) verschiedenen Teil gebildet ist und in das zweite Ende der Welle lösbar eingesetzt ist.

8. Tretkurbel nach Anspruch 1, **dadurch gekennzeichnet, daß** die Trägernabe (119) einteilig mit der Welle (108) ausgebildet ist.

9. Tretkurbel nach Anspruch 7 oder 8, **dadurch gekennzeichnet, daß** die Trägernabe (19, 119) und der Hebel (20) einteilig ausgebildet sind.

10. Tretkurbel nach einem der vorhergehenden Ansprüche, **dadurch gekennzeichnet, daß** die Basis (59) der zweiten Kurbel in Richtung der Welle mittels eines Axiallagers (63), das zwischen ihr und einem an der Nabe durch Verschrauben befestigten Deckel (64) angeordnet ist, gepreßt wird.

11. Tretkurbel nach Anspruch 1, **dadurch gekennzeichnet, daß** die Exzenterscheibe (26) einen rohrförmigen Ansatz (102) aufweist, der sich am ersten Ende des Rohrs (2) über Zentrierungsflächen (101, 126) abstützt, wobei die Welle (8, 108) über die Exzenterscheibe durch das Ende des Rohrs unterstützt ist.

12. Bausatz, der eine Tretkurbel nach einem der Ansprüche 3 bis 5 und ein Gerät (92) zum Messen der von einem Benutzer an die Tretkurbel gelieferten Energie umfaßt, wobei das Gerät die Vorrichtung (81-90) zum Messen des durch die Abstützmittel auf die Exzenterscheibe ausgeübten Gegendrehmoments umfaßt.

13. Bausatz nach Anspruch 12, **dadurch gekennzeichnet, daß** das Meßgerät (92) Mittel umfaßt, die eine Leistung auf der Grundlage der gemessenen Energie berechnen und anzeigen.

14. Bausatz, die eine Tretkurbel (1) ohne Totpunkt sowie ein Gerät (92) zum Messen der von einem Benutzer an die Tretkurbel gelieferten Energie umfaßt, wobei die Tretkurbel (1) umfaßt:
- ein festes Tretkurbelrohr (2),
- wenigstens eine Welle (8), die drehbar um eine Mittelachse (10) innerhalb des Tretkurbelrohrs angebracht ist,
- eine erste Kurbel (11), die an einem ersten Ende der Welle befestigt ist,
- eine zweite Kurbel (13), die eine Basis besitzt, die in der Nähe eines zweiten Endes der Welle angeordnet und drehbar in bezug auf die Welle angebracht ist,
- eine Exzenterscheibe (26), die in der Nähe des zweiten Endes der Welle angeordnet und mit dem Rohr über Abstützmittel verbunden ist,
- ein Abtriebselement (15), das an der Exzenterscheibe drehbar um eine exzentrische Achse (25), die zur Mittelachse parallel, jedoch in einer Exzentritätsrichtung versetzt ist, angebracht ist, wobei das Abtriebselement so beschaffen ist, daß es eine mechanische Kraftübertragung antreibt, und
- eine erste und eine zweite Gelenkverbindung (20, 21, 23), die die Welle (8) bzw. die zweite Kurbel (13) mit dem Abtriebselement (15) verbinden, um dieses anzutreiben,
wobei das Gerät eine Vorrichtung (81-90) zum Messen von auf die Exzenterscheibe (26) ausgeübten Kräften sowie Mittel zum Berechnen eines von den Abstützmitteln auf die Exzenterscheibe ausgeübten Gegendrehmoments anhand dieser Kräfte und zum Berechnen der Energie durch Integration des Drehmoments in bezug auf die Drehung des Abtriebselements (15) umfaßt.

15. Bausatz nach Anspruch 14, **dadurch gekennzeichnet, daß** das Meßgerät (92) Mittel umfaßt, die eine Leistung auf der Grundlage der gemessenen Energie berechnen und anzeigen.

## Claims

1. Crankset with no dead center position, in particular for a bicycle, including
- a fixed crankset tube (2),
- a crankshaft (8, 108) rotatably mounted about a central axis (10) within the crankset tube,
- a first crank (11) secured to a first end of the crankshaft,
- a second crank (13) having a base rotatably mounted relative to a second end of the crankshaft, said second end being provided with a support hub (19, 119) on which the base of the second crank is rotatably mounted by at least one bearing (62, 63),
- an eccentric member (26) arranged in proximity to the second end of the crankshaft and linked to the tube via stopping means,
- an output member (15) mounted on the eccentric member so as to rotate about an eccentric axis (25) which is parallel to the central axis, but offset in a direction of eccentricity, the output member being arranged to drive a mechanical transmission, and
- a first and a second articulated linkage (20, 21, 23) which respectively link the crankshaft (8, 108) and the second crank (13) to the output member (15) in order to drive the latter, the support hub being provided with a lever (20) which forms part of the first articulated linkage,
**characterized in that** the eccentric member (26) is rotatably mounted by a respective bearing (28) on the support hub (19, 119).

2. Crankset according to claim 1, **characterized in that** the stopping means are arranged to define different directions of eccentricity.

3. Crankset according to claim 1 or 2, **characterized in that** it includes a device (81-90) for measuring the reaction torque exerted on the eccentric member by the stopping means.

4. Crankset according to claim 3, **characterized in that** the stopping means are arranged to exert on the eccentric member an orthogonal force with respect to the central axis (10) and **in that** the torque measuring device includes a force sensor (81, 85, 90) incorporated in the stopping means to measure said force.

5. Crankset according to claims 2 and 4, **characterized in that** the stopping means include a control mechanism (87), arranged to modify the direction of eccentricity, and **in that** the force sensor (90) is incorporated in said control mechanism.

6. Crankset according to claim 2, **characterized in that** it includes, facing the eccentric member, a socket (36) screwed into the tube (2) and provided with notches distributed around its periphery on the outside of the tube, and **in that** the stopping means include an indexing ring (30) arranged to engage in said notches and provided with external grooves (44) on which the eccentric member can engage in different angular positions.

7. Crankset according to claim 1, **characterized in that** the support hub (19) is formed by a part distinct from the crankshaft (8) and is fitted in a removable manner onto the second end of the crankshaft.

8. Crankset according to claim 1, **characterized in that** the support hub (119) is made in a single part with the crankshaft (108).

9. Crankset according to claim 7 or 8, **characterized in that** the support hub (19, 119) and the lever (20) are made in a single part.

10. Crankset according to any of the preceding claims, **characterized in that** the base (59) of the second crank is pressed towards the crankshaft by means of a thrust bearing (63) arranged between it and a cover (64) secured to the hub by screwing.

11. Crankset according to claim 1, **characterized in that** the eccentric member (26) includes a tubular end position (102) abutting the first end of the tube (2) via centering surfaces (101, 126), the crankshaft (8, 108) being supported by said end via the eccentric member.

12. Assembly including a crankset according to any of claims 3 to 5 and an apparatus (92) for measuring the energy provided to the crankset by a user, said apparatus including said device (81, 90) for measuring the reaction torque exerted on the eccentric member by the stopping means.

13. Assembly according to claim 12, **characterized in that** the measuring apparatus (92) includes means for calculating and displaying power on the basis of the measured energy.

14. Assembly including a crankset with no dead center position (1) and an apparatus (92) for measuring the energy provided with the crankset by a user, the crankset (1) including :
- a fixed crankset tube (2),
- at least one crankshaft (8) rotatably mounted about a central axis (10) inside the crankset tube,
- a first crank (11) secured to a first end of the crankshaft,
- a second crank (13) having a base arranged in proximity to a second end of the crankshaft and rotatably mounted with respect to said crankshaft,
- an eccentric member (26) arranged in proximity to the second end of the crankshaft and linked to the tube via stopping means,
- an output member (15) mounted on the eccentric member so as to rotate about an eccentric axis (25) which is parallel to the central axis, but offset in a direction of eccentricity, the output member being arranged to drive a mechanical transmission, and
- a first and a second articulated linkage (20, 21, 23) which respectively link the crankshaft (8) and the second crank (13) to the output member (15) in order to drive the latter,
said apparatus including a device (81-90) for measuring forces exerted on the eccentric member (26), and means for calculating, from said forces, a reaction torque exerted on the eccentric member by the stopping means and calculating said energy by integrating said torque with respect to the rotation of the output member (15).

15. Assembly according to claim 14, **characterized in that** the measuring apparatus (92) includes means for calculating and displaying a power on the basis of the measured energy.
